(19) **Europäisches Patentamt**

**European Patent Office**

**Office européen des brevets**

(11) Publication number : **0 577 357 A2**

(12) # EUROPEAN PATENT APPLICATION

(21) Application number : **93305013.0**

(22) Date of filing : **28.06.93**

(51) Int. Cl.[5] : **C08L 83/07, C08K 3/36**

(30) Priority : **30.06.92 US 906627**

(43) Date of publication of application :
**05.01.94 Bulletin 94/01**

(84) Designated Contracting States :
**DE FR GB**

(71) Applicant : **GENERAL ELECTRIC COMPANY**
**1 River Road**
**Schenectady, NY 12345 (US)**

(72) Inventor : **Doin, James Edward**
**RD-1, Box 97**
**Hoosick Falls, New York 12090 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) **Silicone elastomer compositions.**

(57)    Addition curable elastomeric silicone rubber compositions are produced which exhibit good tear strength, good tensile strength, and excellent compression set properties. The blend includes an organopolysiloxane gum, a precipitated silica filler, a cross-linking agent and an addition cure or platinum catalyst to produce a cured silicone elastomer which has a compression set similar to peroxide cured compositions.

EP 0 577 357 A2

## FIELD OF THE INVENTION

The present invention relates to addition cured silicone elastomer compositions. More particularly, the invention relates to platinum catalyzed addition cured silicone elastomer compositions containing precipitated silica which provide improved resistance to compression set comparable to that obtainable from a peroxide catalyzed cure of the same composition.

## BACKGROUND OF THE INVENTION

Platinum catalyzed addition cured silicone rubber compositions are known in the art. Such compositions are known for their ability to resist change at elevated temperature and exposure to adverse conditions over extended periods of time.

Addition curing does not result in the formation of decomposition products. As a result, addition curing is particularly attractive when producing products which contact food. Also, addition curing is usually faster than peroxide curing and often results in different properties. For example, addition cured compositions generally have better tear resistance than peroxide cured compositions using the same starting materials.

Efforts have been made to produce addition cured silicone elastomer compositions having good tear and elongation. A problem with such efforts, however, has been relatively poor compression set resistance when compared to a peroxide catalyzed cure of the same composition. The use of addition cured silicone elastomers in sealing and gasketing applications is thereby significantly limited.

Although curable silicone rubber compositions having good tear strength and elongation are known in the art, addition cured compositions having good resistance to compression set are desired.

## SUMMARY OF THE INVENTION

The present invention is based upon the discovery that addition curable rubber compositions exhibiting good resistance to compression set may be produced by employing a precipitated silica filler. Catalysts which promote an addition cure reaction e.g., noble metals such as Pt, Rh and Pd and rare earth alkali metals such as Cs (hereinafter addition cured catalysts) and particularly Pt are useful catalyzing agents.

According to the present invention, compositions can be produced which, upon curing in the presence of an addition cure catalyst, exhibit good tear strength and elongation properties and good resistance to compression set comparable to that obtainable from a peroxide catalyzed cure of the same composition. The compositions are easily processed and produce repeatable and consistent results.

One embodiment of the invention comprises (A) an organopolysiloxane gum, (C) a precipitated silica filler and (G) an organohydrogensiloxane cross-linking agent. The mixture produces a silicone compound which is addition curable in the presence of (P) a platinum catalyst or other addition cure catalyst.

Unless otherwise specifically noted herein, the amount stated for each of the various components combined to form the compositions of the invention is intended to indicate an approximate value. Failure to particularly state an approximate value in each case however should not be construed as a requirement for an exact amount. For example, in one group of addition cured compositions, blends are formulated which comprise, by weight:

(A) 100 parts by weight of vinyl-stopped diorganopolysiloxane having a viscosity of about 3,000,000 to about 100,000,000 centipoise (cps) at 25°C;

(B) up to 30 parts by weight based on Component (A) of (1) an organopolysiloxane resin copolymer. The resin copolymer may contain $R_3SiO_{1/2}$ monofunctional units (M units) and $SiO_2$ quadri-functional units (Q units), where each R is independently selected from the group consisting of vinyl radicals and monovalent hydrocarbon radicals free of aliphatic unsaturation. The ratio of M units to Q units ranges from about 0.5:1 to about 1.5:1. The resinous copolymer contains from about 0.5 to about 10.0 weight percent vinyl groups.

Alternatively, Component (B) may comprise (2) an organopolysiloxane resin copolymer containing M and Q units as aforesaid and $R_2SiO_{2/2}$ difunctional (D units) where each R is independently selected from the group consisting of vinyl radicals and monovalent hydrocarbon radicals free of aliphatic unsaturation. Each M unit may represent M or M' e.g. M-vinyl units, and each D unit may represent D or D' e.g. D-vinyl units. The ratio of M units to Q units is from 0.5:1 to about 1.5:1 and the D units are present in an amount of from about 1 to 70 mol percent based upon the total number of mols of siloxy units in the copolymer. The resinous copolymer contains from about 0.5 to about 10.0 weight percent vinyl groups. The organopolysiloxane resin copolymer of Component (B) may contain mixtures of the MQ and the M D-vinyl Q, resins.

(C) a precipitated silica;

2

(D) up to about 100 parts based upon Component (A) of a vinyl containing polymer including a vinyl-stopped polymer, or a vinyl-on-chain polymer, or a vinyl-on-chain, vinyl-stopped polymer or mixtures thereof, and having up to about 5 weight percent vinyl;

(G) a hydride crosslinking agent in the form of a random copolymer formed of a polydimethyl siloxane (PDMS) and a polymethyl hydrogen siloxane (PMHS) having the formula:

$$R^2_3SiO(SiOR^1H)_x(SiOR^1_2)_ySiR^2_3$$

wherein each $R^1$ is independently chosen from a monovalent hydrocarbon radical free of aliphatic unsaturation containing 1 to about 8 carbon atoms and wherein each $R^2$ is independently chosen from a hydrogen or monovalent hydrocarbon radical free of aliphatic unsaturation containing 1 to about 8 carbon atoms, and x and y range from about 2 to about 100. In the present invention, the hydride is present in an amount ranging from about 0.1 to 10 weight percent of Component (A), preferably 0.5 to 8, and more preferably 0.8 to 2.5 parts by weight. In Component (G) X and Y may vary so that (G) has a viscosity ranging from about 5 to 500 cps, preferably from about 10 to about 100 cps and more preferably from about 10 to 50 cps at 25°C,

(P1) a platinum catalyst for promoting an addition cure reaction; and

In order to improve properties or processing, the composition may also contain:

(E) up to about 2 parts by weight of a tetramethyl-divinyl silazane based upon Component (A); and

(F) up to about 10 parts by weight based upon Component (A) of a processing aid comprising low viscosity silanol stopped siloxane fluid of a about 3 to 500 centipoise at 25°C, or a dimethyl methoxy siloxane polymer, or similar compositions such as silanol or methoxy fluids of other viscosities.

From 15 to 20 percent of a cyclic methyl tetramer may be used to treat the filler prior to compounding.

(I), an acid acceptor such as magnesium oxide in a vinyl containing gum may also be employed.

(C3), a finely divided fumed silica filler may be employed in addition to (C1);

A small amount of water may also be added to increase the processibility of the blend. If used, only up to about 0.1 parts by weight water based on Component (A) is usually employed.

In addition to the foregoing, (K) a heat aging component such as fumed $TiO_2$, iron octoate, $Ce(OH)_4$, or mixtures thereof, may be present in relatively small amounts, e.g., up to 2 parts by weight based upon Component (A). In the examples below the heat aging component consists of 33 weight percent $TiO_2$, 2.5 weight percent iron octoate solution (which comprises about 12 weight percent iron in mineral spirits), 10 weight percent treated fumed silica (160 $m^2$/gm), and 50 weight percent of an 800 penetration vinyl-stopped, vinyl-on-chain gum.

The compositions of the present invention provide addition cured silicone elastomers having high tear strength and elongation and good resistance to compression set. This excellent balance of properties is exhibited throughout extended periods of use at high temperatures making these compositions extremely attractive for gasketing, sealing and vibration dampening applications.


## DESCRIPTION OF THE INVENTION

The compositions of the present invention generally contain (A) an organosiloxane gum or gums having a viscosity of about 3,000,000 to 100,000,000 cps at 25°C; (C) a precipitated silica filler
; (G) an organohydrogensiloxane cross-linking agent; and
(P) an addition cure catalyst (e.g., Pt). Combinations of various other components as described herein may also be added.

Component (A) is preferably a vinyl containing diorgano siloxane gum or blend of such gums having a viscosity from about 3,000,000 to about 100,000,000 cps at 25°C. Preferably, the gum has a viscosity of between about 7,000,000 and 84,000,000 cps, more preferably, about 13,000,000 cps at 25°C. The gum is preferably vinyl-stopped and has substantially no vinyl-on-chain. The organo groups in the gum should all be monovalent hydrocarbon radicals. The gum may have a weight percent vinyl concentration of from about $5x10^{-3}$ to about 1. The gum preferably has a weight percent vinyl concentration in the range from about $6.5x10^{-3}$ to about 0.03, more preferably from about $8x10^{-3}$ to about $1.5x10^{-2}$ and more preferably yet from about $8x10^{-3}$ to about $1.2x10^{-2}$. The organo groups in the vinyl polymer or polymers of the gum should all be monovalent hydrocarbon radicals.

In a preferred embodiment, Component (A) has the structure:

$$ViSiOR^1_2 (SiOR^1_2)_x(SiOR^2_2)_y SiR^1_2Vi;$$

wherein Vi is vinyl and each $R^1$ is independently chosen from monovalent hydrocarbon free radicals free of aliphatic unsaturation and containing 1 to about 8 carbon atoms; each $R^2$ is independently chosen from monovalent hydrocarbon radicals containing 1 to about 8 carbon atoms; and x and y are integers chosen such that the viscosity is about 3,000,000 to about 100,000,000 cps at 25°. In other preferred embodiments, x and y are integers chosen such that Component (A) has a viscosity which ranges from about 3,000,000 to about 85,000,000 cps at 25°C and a weight percent vinyl. concentration in the range from about $5x10^{-3}$ to about $2x10^{-2}$, preferably from about $8x10^{-3}$ to about $1.5x10^{-2}$ and more preferably from about $8.0x10^{-3}$ to about $1.2x10^{-2}$.

In accordance with the invention, the amount of Component (A) present in the final product may vary. However, for purposes of explanation herein, it is assumed that 100 parts by weight of gum is combined with varying amounts of the other components, and the amount of gum in the final product may thereby be inferred. In the Examples below, Component (A1) is a vinyl-stopped gum of about 6000 D units in length, has substantially no vinyl-on-chain and has a penetration of about 1600. (A2) is similar having about 9000 D units and a penetration of about 300.

Penetration is measured using. Universal Penetrometer by Precision Scientific Model No. 73510 with a substantially air free sample. The sample penetration is measured at 25°C±1°C using a 100 gm weight and a 1/4" diameter by 3/16" needle foot with rounded edges. The needle is lowered until it just touches the surface of the polymer. Then, the time to achieve up to 300 mm penetration is determined or the amount of penetration after 60 sec. Penetration gum is defined as:

$$\frac{\text{Depth of Penetration}}{\text{Time}} \text{ X 60 sec. at 25°C}$$

Penetration may be controlled by controlling the molecular weight and the viscosity of the gum.

Component (B) may be (1) an organopolysiloxane resin copolymer in an appropriate solvent (e.g. (a) xylene or (b) an organosiloxane oil). The resin copolymer may contain $R_3SiO_{1/2}$ monofunctional units (M units) and $SiO_2$ quadri-functional units (Q units), where each R is independently selected from the group consisting of vinyl radicals and monovalent hydrocarbon radicals free of aliphatic unsaturation. The ratio of M units to Q units ranges from about 0.5:1 to about 1.5:1, wherein about 0.5 to 10.0 weight-percent are vinyl groups.

Alternatively, Component (B) may comprise (2) an organopolysiloxane resin copolymer containing M and Q units as aforesaid and $R_2SiO_{2/2}$ difunctional (D or D vinyl units), in an appropriate solvent [(a) or (b) above], where each R is independently selected from the group consisting of vinyl radicals and monovalent hydrocarbon radicals free of aliphatic unsaturation. The ratio of M units to Q units is from 0.5:1 to about 1.5:1 and the D or D vinyl units are present in an amount of from about 1 to 70 mol percent based upon the total number of mols of siloxy units in the copolymer. The resinous copolymer contains from about 0.5 to about 10.0 weight percent vinyl groups. The organopolysiloxane resin copolymer of Component (B) may contain mixtures of the MQ and the M-D vinyl-Q, resins.

The organopolysiloxane resin copolymers of Component (B) in the present composition and their manufacture are well known in the art. Such resins are usually produced by hydrolysis of chlorosilanes in a process described in U.S. Patent No. 3,436,366 which is incorporated herein by reference.

Component (B) may be present in the composition of the present invention in an amount ranging from about 1.0 to about 30, preferably from 1.0 to 20 and more prefer-ably from 4 to about 12 parts by weight based on Component (A). Component (B2a) in the Examples below comprises (B2) dispersed in xylene. Much of the xylene has been vacuum stripped so as to result in a composition comprising 60% by weight solids and 40% by weight xylene. Component (B2b) is a solution of 25% resin in a vinyl chainstopped organopolysiloxane oil of about 1100 D units and about 75,000 ctsk at 25°C.

The process for manufacturing the composition includes a cook and strip step to facilitate the removal of the residual xylene or other light components from the finished compound.

Component (C) comprises up to about 200, preferably from about 1 to about 100 and more preferably from about 10 to about 50 parts by weight based on Component (A) of precipitated silica. An additional and optional reinforcing filler such as fumed silica may be used. The filler may be pre-treated or treated in-situ with various agents, for example cyclopolysiloxanes as disclosed in U.S. Patent No. 2,938,009 to Lucas and silazanes as disclosed in U.S. Patent No. 3,635,743 to Smith. The cyclopolysiloxanes may be, for example, a cyclotetramethyl siloxane present in the amount of about 15 to 20 weight percent of the filler. The precipitated silica fillers may have a surface area of about 100 m²/gm to about 300 m²/gm and preferably about 100 m²/gm to about 180 m²/gm. The higher surface area fillers tend to result in better properties, however, they are more expensive than the lower surface area fillers and require surface treatments or more processing aid to incorporate them into the gum.

In the Examples below, the Component (C1) comprises a precipitated silica having a surface area of about 140 m²/gm and designated as FK 140, sold by Degussa Corporation, Ridgefield Park, New Jersey. Component (C2) is a precipitated silica designated as FK 160, also sold by Degussa Corporation has a surface area of about 160 m²/gm.

Optionally, and in addition to Component (C), Component (C3), a fumed silica having a surface area of about 160 m²/gm which has been pretreated with octamethyl cyclotetrasiloxane may be employed.

(C4) is a precipitated silica filler sold under the tradename HI-Sil 915 comprising about 93% $SiO_2$ hydrate, < 0.5 $NaSO_4$, a surface area of about 215 $m^2/gm$, and a particle size of about $3\mu$. The material is not preferred for use in the invention because it is believed to contain an unknown component which seems to inhibit the addition cure reaction, as shown, in Example XXVI. It does not appear to interfere with peroxide curing as shown in Example XXVIII.

Preferably, Component (D) is added in an amount of up to about 100 parts by weight based on Component (A). The actual amount of Component (D) to be added varies depending upon the vinyl content and the amount of cross-linking desired for controlling the properties exhibited by the cured product.

According to an embodiment of the present invention, Component (D) may be a vinyl-on-chain polymer such as diorganosiloxane gum having a vinyl content of up to about 4 weight percent vinyl, or higher. In the example Component (D), has about .6 weight percent vinyl.

Alternately, Component (D) may be a vinyl-on-chain, vinyl-stopped gum containing from about $5x10^{-3}$ up to about 1.0 weight percent vinyl. When using a vinyl-on-chain, vinyl chain-stopped gum, about 0.1 to about 100 parts by weight are added based on Component (A).

The vinyl polymer or polymers of Component (D) may contain vinyl-on-chain groups and vinyl or methyl end-groups. In preferred embodiments, Component (D) has the formula:

$$SiOR^1_3 (SiOR^1R^{vi})_x(SiOR^2_2)_y SiR^1_3$$

Wherein $R^{vi}$ is a vinyl radical having from 2 to about 10 carbon atoms, each $R^1$ is independently chosen from a vinyl radical having from 2 to about 10 carbon atoms, and a monovalent hydrocarbon free radical free of aliphatic unsaturation and containing 1 to about 8 carbon atoms, each $R^2$ is a monovalent hydro-carbon free radical free of aliphatic unsaturation and containing 1 to about 8 carbon atoms, and x and y are integers, wherein x, y, $R^{vi}$, $R^1$ and $R^2$ are chosen such that Component (D) has a weight percent vinyl concentration in the range from about $5x10^{-3}$ to about 4 weight percent, preferably from about 0.01 to about 4, and more preferably from about 0.03 to about 4. The amount of Component (D) added to the blend may be increased when the vinyl concentration of Component (D) is low, and a lesser amount of Component (D) may be added when its vinyl concentration is high. For example, when using a vinyl-on-chain gum having a vinyl content of about 4 weight percent, only about 0.5 parts by weight based on Component (A) is added. When using a gum having a vinyl content of only about 0.6 weight percent, however, 5 parts by weight are added based on Component (A).

The vinyl-on-chain units of Component (D) provide increased cross-linking of the cured rubber and enhance those properties necessary for use in gasketing, sealing and vibration dampening applications.

The vinyl containing polymers of Component (D) can be made by a process well known in the art, for example, by reacting cyclotetrasiloxanes in the presence of low molecular weight, linear vinyl chain stoppers at high temperatures in the presence of basic catalysts so as to yield a polymer of the desired molecular weight. When the reaction is over, the catalyst is neutralized and the excess cyclics are vented off to result in the desired polymer. By controlling the amount of chain stopper and the temperature of the reaction, the molecular weight of the desired vinyl-containing polymer end product can be controlled. For more details of the process by which such vinyl containing polymers are produced, reference is made, for example, to U.S. Patent No. 3,660,345, which is incorporated herein by reference.

Component (E) is a vinyl terminated silazane coupling agent and surface treatment for the filler which may take the form:

$$ViSiR_2NHSiR_2Vi$$

wherein R is an organic such as $CH_3$. The coupling agent promotes bonding between Components (A) and (C) and between components (B) and (C), and may be applied to the filler, Component (C), prior to mixing with the other components.

Component (E) may be vinyl stopped linear silazane such as tetramethyl-divinyl silazane. The material is added for enhancing the bonding of filler to polymer. In the present invention, the silazane also acts as a filler treatment in-situ.

Component (E) is preferably present in an amount of up to about 2 percent, more preferably up to about 0.3 percent by weight based on the weight of Component (A). Component (E) may be present in an amount of only about 0.03 parts by weight based on 100 parts of Component (A), however, slightly higher amounts are preferred.

In addition to, in conjunction with, or in place of Component (E), small amounts of hexamethyl disilazane may be used to treat fumed silica filler prior to mixing the filler with the other components, or in-situ. If used, up to about 20 parts by weight of hexamethyl disilazane is added based on 100 parts filler.

Other components may also be employed as discussed hereinafter. For example, in order to allow for easier incorporation of the filler in the gum, Component (F), a processing aid or plasticizer is employed. In the preferred embodiment, Component (F) is a low viscosity silanol stopped siloxane fluid having a viscosity ranging from about 3-500 cps and preferably 3 to 50 cps at 25°C. The siloxane fluid is an equilibrium mix of low molecular weight oligomers of about 4 to about 10 D units, preferably between 4 and 6 repeating units in length with a minimum amount of cyclics in equilibrium with the oligomers. The processing aid (F) may have the form of $(R_2SiO_{1/2})_xOH$ where each R is $CH_3$ and x is between 4 and 10, preferably between 4 and 6, with resulting cyclics of the same number of units in equilibrium. Alkoxy terminated siloxanes such as methoxy siloxane having an alkoxy content of from about 5.5 to about 8 percent methoxy and a viscosity of about 5-11 centistokes having the form:

$$(ROSiR_2)_z(SiOR_2)_x$$

where R is $CH_3$ may also be used as process aids. In the present invention, the processing aids are present in amounts between 2 and 10 weight percent of Component (A) preferably between 2.5 and 5.0 parts by weight and most preferably about 3.5 parts by weight based on Component (A). It should be understood that typically the more filler that is used the greater amount of processing aid is employed. In the Examples below, Component (F) has a silanol content of about 7.5 % by weight although a silanol content of about 5 to about 10 weight percent is expected to provide good results.

In addition to the foregoing, Component (G) in the form of a hydride cross-linking agent may be employed. In a preferred embodiment, Component (G) may be a random copolymer formed of a polydimethyl siloxane (PDMS) and a polymethyl hydrogen siloxane (PMHS) having the form:

$$R^2_3SiO(SiOR^1H)_x(SiOR^1_2)_ySiR^2_3$$

where each $R^1$ is independently chosen from a monovalent hydrocarbon radical free of aliphatic unsaturation containing 1 to about 8 carbon atoms and wherein each $R^2$ is independently chosen from a hydrogen or monovalent hydrocarbon radical free of aliphatic unsaturation containing 1 to about 8 carbon atoms, and x and y range from about 2 to about 100. In the present invention, component (G) is present in an amount ranging from about 0.1 to 10 weight percent of Component (A), preferably 0.5 to 8, and more preferably 0.8 to 2.5 parts by weight. In Component (G) x may vary so that (G) has a viscosity ranging from about 5 to 500 cps, preferably from about 10 to about 100 cps and more preferably from about 10 to 50 cps at 25°C.

The linear hydride described above can be made by many procedures which are known in the art and particularly by the hydrolysis of appropriate chlorosilanes. See for example, U.S. Patent No. 4,041,101 which is incorporated herein by reference. In the Examples below, Component (G) has a viscosity of about 30 centistokes, a hydride content of about 0.8 percent by weight or more, and a chain length of about 100 units.

A small amount of water may also be added to increase the processibility of the blend. If used, only up to about 0.1 parts by weight water based on Component (A) is usually employed.

To improve the heat-age resistance of the cured compositions of the present invention, Component (H), a heat-age additive, may be employed. The heat aging component such as fumed $TiO_2$, iron octoate, $Ce(OH)_4$, or mixtures thereof, may be present in relatively small amounts, e.g., up to 2 parts by weight based upon Component (A). In the examples below the heat aging component consists of 33 weight percent $TiO_2$, 2.5 weight percent iron octoate (12% iron in mineral spirits), 10 weight percent treated fumed silica (160 $m^2$/gm), and 50 weight percent of an 800 penetration vinyl-stopped, vinyl-on-chain gum.

Only up to about 2 parts by weight Component (H) is needed based on Component (A) to improve the heat-age characteristics of the composition.

In the present invention, Component (I) comprises from about .05 to about 10 parts by weight based upon Component (A) of an acid acceptor such as magnesium oxide (MgO). In the examples below, the magnesium oxide may be added as a master batch that is 25% Maglite D-1685 available from Whittaker, Clark and Daniels, in a VOC polymer containing about .2 wt. % vinyl.

Other components which may be added to the blends of the present invention include, but are not limited to:

(K) a heat age additive comprising cerium hydroxide, preferably about 75% by weight, master-batched in polydimethylsiloxane fluid having a viscosity of about 30,000 cps at 25°C.

In the present invention, Components (H), (I) and (K) are generally added to the HCR compounds after the materials have been formulated and passed through a cook cycle to remove volatiles. The temperature during the addition is less 80°C, and the additions are preferably made when the compound is in the doughmixer. Alternatively, these Components may be added to the compound while being banded on a rubber mill. Either mode of addition is performed until the Component is thoroughly dispersed.

(L) a dimethyl polysiloxane gum having a penetration of 800 and containing about 7000 D units may be blended into the composition. Component (L) is employed in two of the examples below.

(M) a pigment such as carbon black in a PDMS master batch sold by Kenrich Corp may be used. The material is essentially inert and is primarily for aesthetics.

In order to form a curable rubber having desirable properties according to the present invention, (P) a catalyst capable of initiating an addition cure reaction is required. In particular, because it is desirable to improve cure times and reduce decomposition products in various applications, a platinum catalyst is preferred. Other noble metals e.g., Rh and Pd and rare earth alkali metals such as Cs are effective addition cured catalysts. Compositions containing fumed silica formed with such catalysts tend to have poor resistance to compression set comparable to that obtainable from a peroxide catalyzed cure of the same composition.

However, it has been found that precipitated silica filler when used in combination with such catalysts results in a composition having good resistance to compression set. Although many commercial sources of platinum catalyst can be successfully employed, the exemplary platinum catalyst (P1) is a platinum based compound consisting generally of a silicone rubber compound containing 2800 ppm platinum. Preferably the platinum complex is derived from a chloroplatinic acid.

In order to evaluate results obtained with the platinum catalyst (P1), an organic peroxide catalyst (P2) has been employed. The peroxide catalysts are thermal decomposition organic peroxides conveniently used to cure silicone elastomers. Examples of suitable organic peroxide free radical initiators for use in the present invention are disclosed, for example, in U.S. Patent No. 4,539,357 to Bobear which is incorporated herein by reference.

In the examples below, (P2) is Lupersol™ 101 sold by Lucidol Division of Penwalt Corp. which is a paste comprising 2,5 dimethyl-2,5-di(t-butyl peroxy) hexane which is on a carrier (calcium carbonate) and dispersed in a polydimethylsiloxane fluid having a viscosity of 30,000 cps at 25°C. The composition contains about 33 weight percent peroxide and requires about 1.2 parts of the master batch to provide about 0.4 parts of active peroxide.

## EXAMPLES

The following Examples shown below used components mixed in various proportions to produce silicone rubber compositions. Of particular interest are the compositions based upon precipitated silica filler that demonstrate good resistance to compression set.

## BASE COMPOSITIONS 1 AND 2
### (Base 1 and 2)

| Component | Base 1 Parts/Wt. | Base 2 Parts/Wt. |
|---|---|---|
| A2 | 76.2 | 76.2 |
| B | 23.8 | 23.8 |
| C1 | -- | 30.0 |
| C3 | 30.0 | -- |
| E | 0.15 | 0.15 |
| F | 4.0 | 4.0 |
| G | 1.8 | 1.8 |
| H | 1.2 | 1.2 |
| I | 1.6 | 1.6 |
| $H_2O$ | 0.1 | 0.1 |

| Example | I Parts/Wt. | II Parts/Wt. | III Parts/Wt. | IV Parts/Wt. |
|---|---|---|---|---|
| Base 1 | 100 | 100 | -- | -- |
| Base 2 | -- | -- | 100 | 100 |
| PI | 1.5 | -- | 1.0 | -- |
| P2 | -- | 1.2 | -- | 1.2 |

### Properties

| | I | II | III | IV |
|---|---|---|---|---|
| Shore A | 44 | 48 | 35 | 39 |
| Tensile (psi) | 1700 | 1429 | 1260 | 925 |
| Elongation % | 1050 | 852 | 926 | 736 |
| Tear (ppi) | 182 | 167 | 125 | 71 |
| 100% modulus (psi) | 127 | 159 | 109 | 130 |
| Comp. set* | 68.8 | 21.3 | 22.6 | 15.6 |

* All examples (22 hours at 350° F)
Fumed Si + P1 (poor compression set)
Fumed Si + P2 (good compression set)

Precipitated silica + P1 (good compression set)
Precipitated silica + P2 (good compression set)

Note enhanced tensile and tear strength of precipitated base formulation catalyzed with P1.

8

| BASE COMPOSITIONS 3 AND 4 (Base 3 and 4) | | | | |
|---|---|---|---|---|
| Component | Base 3 Parts/Wt. | Base 4 Parts/Wt. | | |
| A | 78 | 78 | | |
| C1 | 40 | -- | | |
| C3 | -- | 38 | | |
| D | 22 | 22 | | |
| E | 0.1 | 0.1 | | |
| F | 3 | 3 | | |
| G | 1.5 | 1.5 | | |
| $H_2O$ | -- | 0.1 | | |
| Example | V Parts/Wt. | VI Parts/Wt. | VII Parts/Wt. | VIII Parts/Wt. |
| Base 3 | 100 | 100 | -- | -- |
| Base 4 | -- | -- | 100 | 100 |
| H | 0.8 | 0.8 | 0.8 | 0.8 |
| I | 1.0 | 1.0 | 1.0 | 1.0 |
| P2 | 1.2 | 1.2 | 1.2 | 1.2 |
| M | 0.5 | -- | 0.5 | -- |
| P1 | -- | 1.2 | -- | 1.2 |
| Properties | | | | |
| Shore A | 56 | 55 | 52 | 53 |
| Tensile (psi) | 1065 | 970 | 1285 | 1340 |
| Elongation % | 360 | 415 | 555 | 658 |
| Tear (ppi) | 73 | 235 | 267 | 303 |
| 100% modulus | 326 | 312 | 288 | 333 |
| Comp. set | 15.5 | 12.7 | 27.1 | 57.4 |

Fumed silica with P1 yields poor compression set.
Precipitated Silica with P1 yields good compression set.

| BASE COMPOSITION 5 (Base 5) | | |
|---|---|---|
| Component | Base 5 Parts/Wt. | |
| A | 65 | |
| C1 | 39 | |
| D | 15 | |
| E | 0.08 | |
| F | 3.0 | |
| G | 1.4 | |
| L | 20 | |
| Example | IX Parts/Wt. | X Parts/Wt. |
| Base 5 | 100 | 100 |
| H | 1.2 | 1.2 |
| I | 1.5 | 1.5 |
| P1 | 1.2 | -- |
| P2 | -- | 1.2 |
| Properties | | |
| Shore A | 45 | 47 |
| Tensile (psi) | 1140 | 1093 |
| Elongation % | 693 | 563 |
| Tear (ppi) | 210 | 270 |
| 100% modulus | 182 | 182 |
| Comp. set | 17.6 | 15.0 |

Precipitated silica and P1: No loss of compression set.

## BASE COMPOSITIONS 6 AND 7
### (Base 6 and 7)

| Component | Base 6 Parts/Wt. | Base 7 Parts/Wt. |
|---|---|---|
| A | 78 | 78 |
| C1 | -- | 32 |
| C3 | 32 | -- |
| D | 22 | 22 |
| E | .1 | .1 |
| F | 3 | 3 |
| G | 1.5 | 1.5 |
| $H_2O$ | 1.0 | -- |

| Example | XI Parts Wt. | XII Parts Wt. | XIII Parts Wt. | XIV Parts Wt. | XV Parts Wt. | XVI Parts Wt. |
|---|---|---|---|---|---|---|
| Base 6 | 100 | 100 | -- | -- | 50 | 50 |
| Base 7 | -- | -- | 100 | 100 | 50 | 50 |
| P2 | 1.2 | -- | 1.2 | -- | 1.2 | -- |
| P1 | -- | 1.2 | -- | 1.2 | -- | 1.2 |
| H | 0.8 | 0.8 | 0.8 | 0.8 | 0.8 | 0.8 |
| I | 1.0 | 1.0 | 1.0 | 1.0 | 1.0 | 1.0 |
| M | 0.5 | 0.5 | 0.5 | 0.5 | 0.5 | 0.5 |

### Properties

**Run A**

| | XI | XII | XIII | XIV | XV | XVI |
|---|---|---|---|---|---|---|
| Shore A | 48 | 46 | 47 | 46 | 47 | 48 |
| Tensile (psi) | 1248 | 1433 | 944 | 1022 | 1037 | 1015 |
| Elongation % | 671 | 639 | 592 | 227 | 536 | 575 |
| Tear B | 245 | 247 | 464 | 227 | 536 | 240 |
| 100% modulus | 205 | 200 | 61 | 193 | 202 | 230 |
| Comp. set | 22.6 | 22.7 * | 197 | 17.2 | 21.1 | 23.7 |
| | | | 17.4 | | | |

**Heat Age 168h/350F**

| | XI | XII | XIII | XIV | XV | XVI |
|---|---|---|---|---|---|---|
| Shore A | 54 | 50 | 50 | 49 | 52 | 52 |
| Tensile (psi) | 1148 | 1147 | 828 | 905 | 1012 | 1003 |
| Elongation % | 529 | 532 | 350 | 406 | 449 | 421 |
| Tear B | 230 | 250 | 219 | 244 | 221 | 242 |

**Run B**

| | XI | XII |
|---|---|---|
| Shore A | 47 | 46 |
| Tensile (psi) | 1150 | 1390 |
| Elongation % | 614 | 754 |
| Tear B | 229 | 257 |
| 100% modulus | 210 | 190 |
| Comp. set | 19.2 | 51.6 |

XI and XII were run twice.

* Comp. set 22.7 in Example XII, Run A is believed to represent and error in the data which was transcribed for Run A. Run B of Example XII is believed to be a more accurate representation of the physical properties. The data from the other examples including Example XII Runs A and B is consistent with the conclusions expressed herein.

| BASE COMPOSITIONS 8, 9 AND 10 (Base 8, 9 and 10) | | | | | |
|---|---|---|---|---|---|
| Component | Base 8 Parts/Wt. | Base 9 Parts/Wt. | Base 10 Parts/Wt. | | | |
| A | 78 | 78 | 78 | | | |
| C1 | 38 | 38 | -- | | | |
| C2 | -- | -- | 38 | | | |
| D | 22 | 22 | 22 | | | |
| E | 0.1 | 0.1 | 0.1 | | | |
| F | 2.5 | 3.5 | 4.0 | | | |
| G | 1.5 | 1.0 | 1.5 | | | |
| Example | XVII Parts Wt. | XVIII Parts Wt. | XIX Parts Wt. | XX Parts Wt. | XXI Parts Wt. | XXII Parts Wt. |
| Base 8 | 100 | 100 | -- | -- | -- | -- |
| Base 9 | -- | -- | 100 | 100 | -- | -- |
| Base 10 | -- | -- | -- | -- | 100 | 100 |
| P2 | 1.2 | | 1.2 | | 1.2 | |
| P1 | | 1.2 | | 1.2 | | 1.2 |
| Properties | | | | | | |
| Shore A | 57 | 53 | 54 | 43 | 54 | 53 |
| Tensile (psi) | 1122 | 1161 | 1158 | 1048 | 1126 | 1145 |
| Elongation % | 406 | 559 | 432 | 742 | 499 | 565 |
| Tear B | 84 | 251 | 81 | 197 | 109 | 204 |
| 100% modulus | 331 | 318 | 302 | 201 | 302 | 316 |
| SG | 1.145 | 1.145 | 1.143 | 1.143 | 1.140 | 1.140 |
| Comp. set | 19.5 | 26.4 | 20.4 | 42.9 | 25 | 25.2 |
| With these formulations it is demonstrated that >1.0 pts/wt. of G is needed to achieve good P1 cure with precipitated silica. | | | | | | |

| BASE COMPOSITIONS 11 AND 12 (Base 11 and 12) | | |
|---|---|---|
| Component | Base 11 Parts/Wt. | Base 12 Parts/Wt. |
| A2 | 85 | 85 |
| D | 15 | 15 |
| C1 | -- | 25 |
| C3 | 25 | -- |
| F | 2 | 2 |
| G | 1.3 | 1.5 |
| Example | XXIII Parts/Wt. | XXIV Parts/Wt. |
| Base 11 | 100 | -- |
| Base 12 | -- | 100 |
| P1 | 1 | 1 |
| Properties | | |
| Shore A | 30 | 32 |
| Tensile (psi) | 1483 | 1027 |
| Elongation % | 1043 | 774 |
| Tear (ppi) | 164 | 148 |
| 100% modulus | 95 | 125 |
| SG | 1.087 | 1.093 |
| BAYShore Resilience | 60 | 67 |
| Comp. set | 89.3 | 27.6 |

| BASE COMPOSITIONS 13 AND 14 (Base 13 and 14) | | | | |
|---|---|---|---|---|
| Component | Base 13 Parts/Wt. | Base 14 Parts/Wt. | | |
| A | 80 | 80 | | |
| C3 | 34 | -- | | |
| C4 | -- | 45 | | |
| D | 20 | 20 | | |
| E | 0.1 | 0.1 | | |
| F | 3 | 3 | | |
| G | 1.5 | 1.5 | | |
| $H_2O$ | 0.1 | 0.1 | | |
| Example | XXV Parts/Wt. | XXVI Parts/Wt. | XXVII Parts/Wt. | XXVIII Parts/Wt. |
| Base 13 | 100 | -- | 100 | -- |
| Base 14 | -- | 100 | -- | 100 |
| H | 0.7 | 0.7 | 0.7 | 0.7 |
| I | 0.9 | 0.9 | 0.9 | 0.9 |
| P1 | 1.2 | 1.2 | -- | -- |
| P2 | -- | -- | 1.2 | 1.2 |
| M | -- | -- | 0.5 | 0.5 |
| Properties | | | | |
| Shore A | 49 | 37 | 49 | 61 |
| Tensile (psi) | 1092 | 254 | 1118 | 1153 |
| Elongation % | 751 | 340 | 605 | 372 |
| Tear (ppi) | 267 | 85 | 219 | 93 |
| 100% modulus | 190 | 101 | 214 | 360 |
| SG | 1.133 | 1.169 | 1.130 | 1.166 |
| Comp. set | 42.2 | -- | 24.6 | 23.1 |

As noted earlier in the description, Component (C4) is a precipitated silica which does not appear to allow the addition cure reaction to proceed. Examples XXVI and XXVII contain Component (C4). The properties of the platinum cured composition of Example XXVI (e.g. tensile, tear, and % elongation) are low in comparison to the corresponding properties of the peroxide cured composition of Example XXVII. Also, and importantly, the composition of Example XXVI containing (C4) did not cure in the presence of platinum as evidenced by the inability to discern a measurable compression set. It is thought that the (C4) component contains a cure inhibitor which may be unique to the particular brand of precipitated silica, whereas other brands of precipitated silica, in particular, (C1) and (C2) sold by Degussa do not inhibit the addition cure reaction and are thus satisfactory components effective for carrying out the invention.

In accordance with the invention, it can be said that the precipitated silica in combination with a platinum or addition cure catalyst improves compression set resistance in a curable rubber composition. The usual advantages of addition cure are present, i.e., increased elongation and improved tear strength.

While there have been described what at present are considered to be the preferred embodiments of the present invention, it will be readily apparent to those skilled in the art that various changes may be made therein without departing from the invention and it is intended in the claims to cover such changes and modifications as fall within the true spirit and scope of the invention.

**Claims**

1. A curable silicone rubber composition comprising in parts by weight:
   (A) 100 parts by weight of an organopolysiloxane having a viscosity of about 3 million to about 100 million cps at 25°C;
   (C1) up to about 200 parts by weight based upon Component (A) of a first filler consisting essentially of precipitated silica such that an addition cured composition results having a compression set comparable to that obtainable from a peroxide catalyzed cure of the same composition;
   (G) from about 0.1 to about 10 weight percent based on Component (A) of a hydride cross-linking agent; and
   (P) a catalyst which promotes addition cure of the composition.

2. The composition of claim 1, wherein the precipitated silica filler is present in an amount ranging from 1 to about 100 parts by weight based upon Component (A).

3. The composition according to claim 1, further comprising (C3) a second filler of a fumed silica.

4. The composition according to claim 1, further comprising
   (B) about 1 to about 30 parts by weight based upon Component (A) of an organopolysiloxane resin copolymer comprising:
   1) $R_3SiO_{1/2}$ units (M units) and $SiO_2$ units (Q units) where each R is independently selected from the group consisting of vinyl radicals and monovalent hydrocarbon radicals free of aliphatic unsaturation with a ratio of M units to Q units ranging from 0.5:1 to about 1.5:1, where the copolymer contains from about 0.5 to 10 weight percent vinyl groups, or
   2) $R_3SiO_{1/2}$ units (M units), $SiO_2$ units (Q units) and $R^{vi}_2SiO_{2/2}$ units (D vinyl units) where each R is as defined above and each $R^{vi}$ is a vinyl containing radical having from 2 to about 10 carbon atoms, and where the ratio of M units to Q units is from 0.5:1 to about 1.5:1, and the D vinyl units are present up to about 70 mol percent based upon the total number of mols of siloxy units in the copolymer, and where the resinous copolymer contains from about 0.5 to about 10.0 weight percent vinyl groups, or
   3) mixtures of 1 and 2.

5. The heat cured silicone rubber composition of claim 1, wherein Component (A) has the structure:
   $ViSiOR^1_2 (SiOR^1_2)_x(SiOR^2_2)_y SiR^1_2Vi$;
   wherein Vi is vinyl, and each $R^1$ is independently chosen from monovalent hydrocarbon free radicals free of aliphatic unsaturation and containing 1 to about 8 carbon atoms;
   each $R^2$ is independently chosen from monovalent hydrocarbon radicals containing 1 to about 8 carbon atoms, and x and y are integers chosen such that the viscosity is about 3,000,000 to about 100,000,000 cps at 25°.

6. The composition according to claim 1, further comprising:
   (D) up to about 100 parts based upon Component (A) of a vinyl containing polymer having a vinyl content of up to about 4 weight percent, Component (D) increasing the amount of cross-linking within the heat cured silicone rubber composition.

7. The heat cured silicone rubber composition of claim 1, further comprising:
   (E) up to about 2 parts by weight of a tetramethyl-divinyl silazane based on 100 parts by weight of Component (A).

8. The heat cured silicone rubber composition of claim 1, further comprising:
   (F) up to about 10 parts by weight based upon Component (A) of a silanol stopped siloxane fluid having a viscosity of about 3 to about 500 cps at 25°C.

9. The heat cured silicone rubber composition of claim 1, wherein Component (G), is an organohydrogensi-

15

loxane cross-linking agent having a hydride content of about 0.8 percent by weight.

10. The heat cured silicone rubber composition of claim 1, further comprising Component (H) up to about 2 parts by weight based upon Component (A) of a heat-age additive.